(19) Europäisches Patentamt
European Patent Office
Office européen des brevets

(11) EP 1 010 736 A1

(12) **EUROPEAN PATENT APPLICATION**

(43) Date of publication:
**21.06.2000 Bulletin 2000/25**

(51) Int. Cl.[7]: **C09D 11/00**

(21) Application number: **99125308.9**

(22) Date of filing: **17.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.12.1998 JP 37590198**
**02.04.1999 JP 9578399**

(71) Applicant: **NEC CORPORATION**
**Tokyo (JP)**

(72) Inventors:
- **Onishi, Yasuharu**
  **Minato-ku, Tokyo (JP)**
- **Endoh, Hiroyuki**
  **Minato-ku, Tokyo (JP)**
- **Uezono, Tsutomu**
  **Minato-ku, Tokyo (JP)**
- **Hasegawa, Etsuo**
  **Minato-ku, Tokyo (JP)**

(74) Representative:
**VOSSIUS & PARTNER**
**Siebertstrasse 4**
**81675 München (DE)**

(54) **Water based ink**

(57) A water based ink can achieve high water resistance, high color fastness to light and high color density, and cause little bluing, and in conjunction therewith, can achieve satisfactory ejection stability. The water based ink composition is composed of at least water, pigment as coloring agent, an organic solvent, a surface active agent and at least one kind of compound expressed by the following general formula:

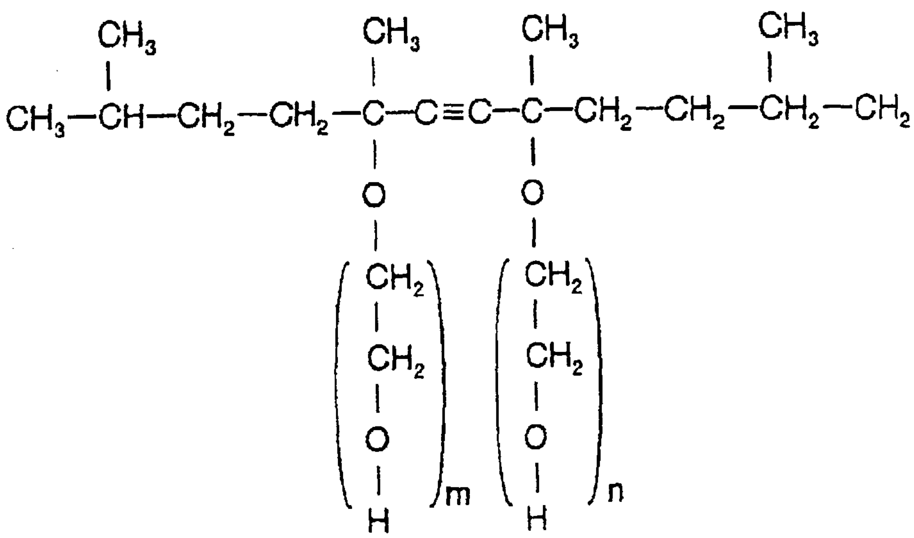

EP 1 010 736 A1

## Description

The present invention relates generally to a water based ink. More particularly, the invention relates to a water based ink for an ink-jet printing apparatus. Further particularly, the invention relates to a water based ink employing a pigment as a coloring agent.

An ink-jet printer (IJP) has been dramatically spread as general printer requiring lesser processes, such as development, fixing and so forth, easiness of color printing, or so forth. Particularly, in the recent years, increasing of printing density and speeding-up of the ink-jet printer has been progressed very rapidly. Furthermore, color printers which can be printed on plain paper, have been marketed. In such circumstance, load on an IJ ink as a printing liquid for the ink-jet printer is growing, and consequently, higher performance of the ink is desired.

The IJ ink is generally divided into a dye type ink employing a water based dye as the coloring agent and a pigment ink employing a pigment as the coloring agent. Currently, most of the ink-jet printers employ dye inks. Dye inks encounters problems in lack of color fastness to light, water resistance of printed images.

Namely, in the dye ink, dies to be employed as coloring agent originally have property of low color fastness to light. Therefore, the image printed by such dye ink inherently lacks color fastness to light. On the other hand, the dye ink typically employs a dye having high water solubility for preventing plugging upon ejection. Therefore, the image printed by the dye ink is not enough. If a printed product contacts with water, decoloring is inherently progressed to cause significant color variation. Accordingly, in dye ink, it has been an important task to develop a dye which can satisfy color tone, water resistance and color fastness to light. However, such material has not been developed.

In the recent years, pigment ink has been proposed as an ink having high color fastness to light and water resistance. On example of a pigment ink for IJP has been disclosed in Japanese Unexamined Patent Publication Nos. Heisei 2-255875 and Heisei 4-18462. When the pigment ink is employed as a printing liquid for the IJP, a high quality image having high water resistance, high color fastness to light and high color density, and causing little bluing, can be obtained.

However, on the other hand, the pigment ink encounters drawback in causing plugging in a head nozzle to degrade stability of ejection. As a measure for preventing plugging of the pigment ink in the head nozzle, there is an example, in which the pigment and a dispersant are combined, as disclosed in Japanese Unexamined Patent Publication No. Heisei 4-189876. However, in this approach, since a water soluble resin is used as the dispersing agent, viscosity of the ink can be increased to possibly cause solidification in an ejection nozzle portion and thus to cause ejection failure.

The present invention has been worked out in view of the problems set forth above. Therefore, it is an object of the present invention to provide a water based ink which can achieve high water resistance, high color fastness to light and high color density, and cause little bluing, and in conjunction therewith, can achieve satisfactory ejection stability.

Another object of the present invention is to provide a water based ink which employs a pigment as a coloring agent and can achieve high ejection stability.

According to the first aspect of the present invention, a water based ink composition composed of at least water, pigment as coloring agent, an organic solvent, a surface active agent and at least one kind of compound expressed by the following general formula (I):

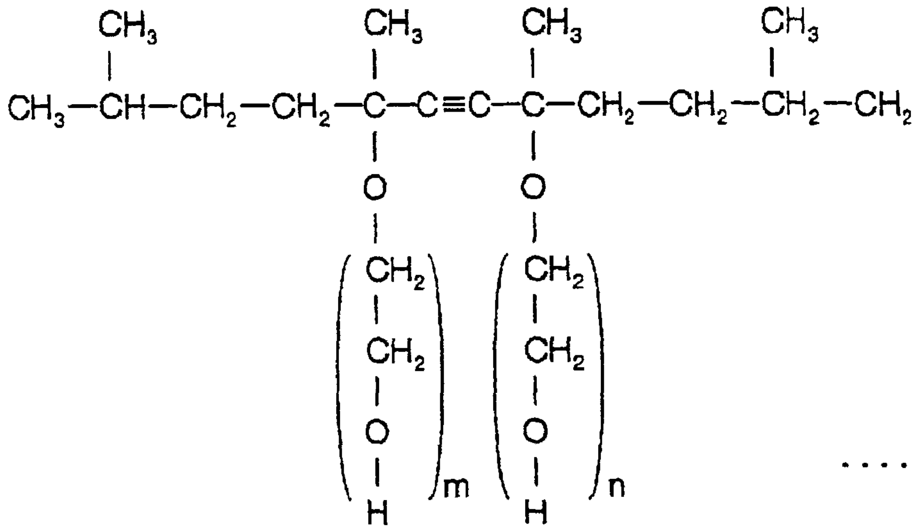

..... (I)

Preferably, m and n in the general formula (I) are integer and value of m + n is in a range of 1 to 30. Also, the compound expressed by the general formula (I) may be contained in the water based ink composition within a range of 0.01 to 1.0 Wt%. The pigment may be contained in a range of 0.1 to 25 Wt% with respect to the composition.

Preferably, the organic solvent may be a water soluble organic solvent and is contained in the water based ink composition within a range of 5 to 50 Wt%. The organic solvent may contain at least one kind of organic compound selected among diethylene glycol, propylene glycol, polyethylene glycol, glycerin, triethylene glycol monobutyl ether or diethylene glycol monobutyl ether.

The water based ink composition may have static surface tension of the water based ink composition in a range of 20 to 50 dyne/cm, pH value in a range of 6.5 to 10, and viscosity in a range of 1 to 10 cps.

According to the second aspect of the present invention, a water based ink composition composed of at least water, pigment, at least one kind of compound expressed by the following general formula (II):

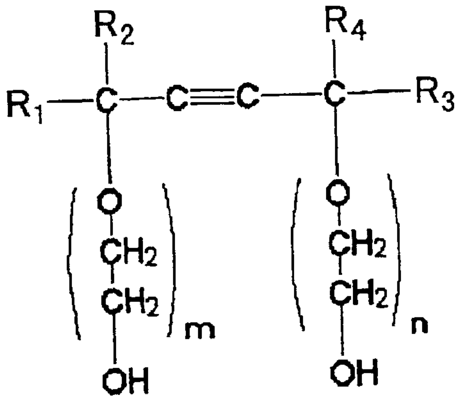

..... (II)

wherein $R_1$ and $R_3$ are alkyl group with branch of carbon number 4 to 17, $R_2$ and $R_4$ are alkyl group of carbon number 1 to 10, m and n are 0 or positive integer,
and at least one kind of alkylene oxide polymer expressed by the following the general formula (III):

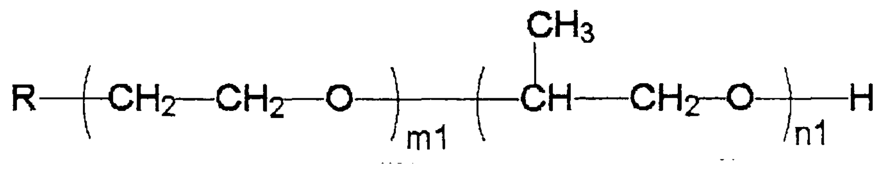

..... (III)

wherein m1 and n1 are 0 or positive integer, R is one selected among H, alkyl group of carbon number 1 to 10 and alkoxyl group of carbon number 1 to 10.

The acetylene glycol type compound expressed by the foregoing general formula (II) is preferably at least one kind of acetylene glycol type composition expressed by the following general formula (IV):

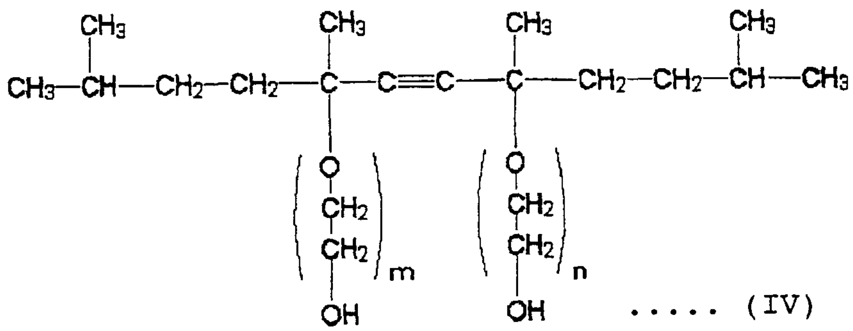

..... (IV)

wherein m and n are 0 or positive integer.

The acetylene glycol type compound and the alkylene oxide polymer may be contained in the water based ink composition in a compound ratio of 0.01 to 10 : 0.01 to 5 by weight. The acetylene glycol type compound and the pigment may be contained in the water based ink composition in a compound ratio of 0.01 to 10 : 0.1 to 25. The water based ink composition may further contain an organic solvent. The acetylene glycol type compound and the organic solvent may be contained in the water based ink composition in a compound ratio of 0.01 to 10 : 5 to 50 by weight.

In the general formulae (II) and (IV), m + n in the general may be in a range of 1 to 30, and m1 and n1 in the general formula (III) may be positive integer, respectively. The compound expressed by the general formula (II) may be contained in a range of 0.01 to 10.0 Wt% versus total amount of the water based ink composition. The compound expressed by the general formula (III) may be contained in a range of 0.01 to 5.0 Wt% versus total amount of the water based ink composition. The pigment may be contained in a range of 0.1 to 25 Wt% versus total amount of the water based ink composition.

The organic solvent may be contained in a range of 5 to 50 Wt% versus total amount of the water based ink composition. Preferably, the organic solvent is a water soluble organic solvent. The organic solvent may contain at least one kind of organic compound selected among diethylene glycol, propylene glycol, polyethylene glycol, glycerin, triethylene glycol monobutyl ether or diethylene glycol monobutyl ether.

The water based ink composition may have physical property, wherein static surface tension of the water based ink composition is in a range of 20 to 50 dyne/cm at 20 °C, pH value is in a range of 6.5 to 10, and viscosity is in a range of 1 to 10 cps.

The present invention will be discussed hereinafter in detail in terms of the preferred embodiment of the present invention. In the following description, numerous specific details are set forth in order to provide a thorough understanding of the present invention. It will be obvious, however, to those skilled in the art that the present invention may be practiced without these specific details. In other instance, well-known structure are not shown in detail in order to avoid unnecessary obscurity of the present invention.

<u>FIRST EMBODIMENT</u>

The first embodiment of a water based ink according to the present invention is consisted of water, a pigment as a coloring agent, an organic solvent and a compound. The water based ink as a composition contains at least one acetylene glycol type compound expressed by the following the general formula (1):

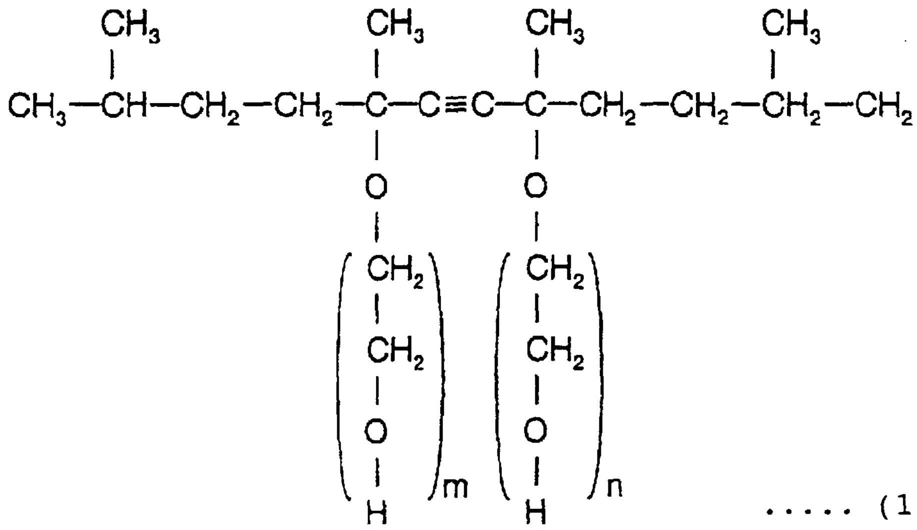

..... (1)

wherein m and n are integers.

As acetylene glycol compound expressed by the foregoing general formula having an acetylene linkage in a central structure, may be compounds generally expressed by the following the general formula (2), for example:

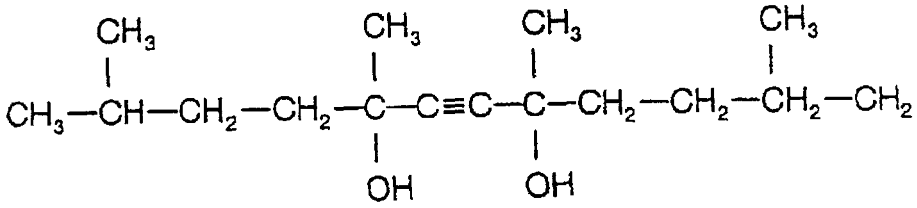

..... (2)

In consideration of solubility of the ink, it is preferred that the compound is acetylene glycol compound added ethylene oxide, such as those expressed by the following the general formula (3):

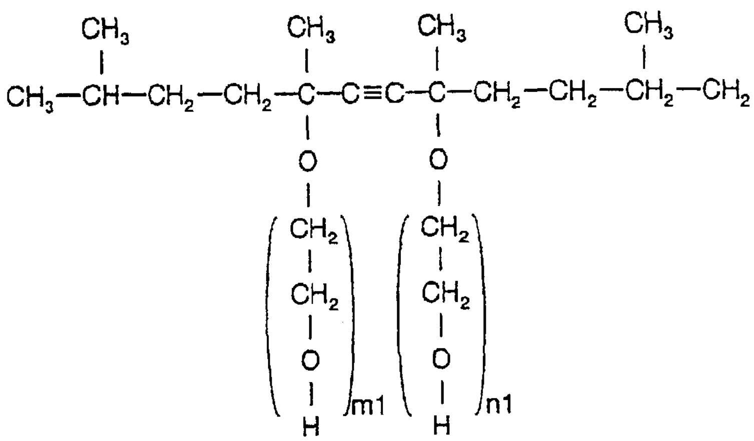

..... (3)

wherein m1 and n1 are integers greater than or equal to 1.

The kind of the compound expressed by the foregoing formula (3) is not specified as long as the compound is acetylene glycol compound having molecular weight greater than or equal to 30, acetylene linkage in the central structure and being expressed by the foregoing general formula (1) added ethylene oxide (wherein m and n in the formula (1) are integers greater than or equal to 1). As compound of this kind, acetylene glycols expressed by the following the general formulae (4) and (5):

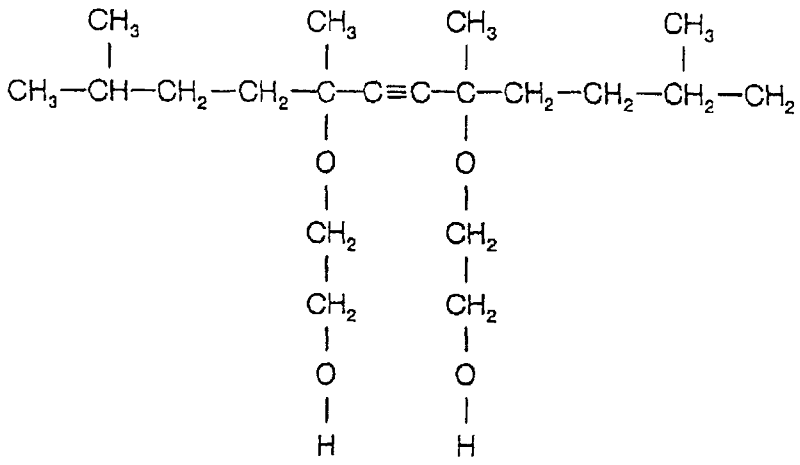

..... (4)

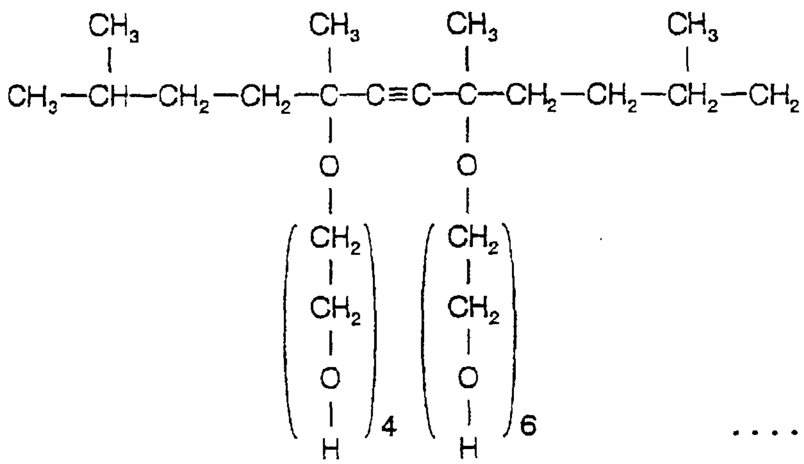

..... (5)

Considering solubility of the ink, acetylene glycol compounds are preferably have values of m + n in a range of 1 to 30.

In the shown embodiment, additive amount of acetylene glycol compound expressed by the foregoing formula (1) to the water based ink composition, is preferably in a range of 0.01 Wt% to 1.0 Wt% relative to the water based ink compound. If less than 0.01 Wt% of acetylene glycol compound expressed by the foregoing general formula (1) is added to the water based ink, effect for improving pigment dispersing ability, ink ejection stability, ink storing stability become insufficient. On the other hand, if acetylene glycol compound in excess of 1.0 Wt% is added, acetylene glycol compound may not be solved completely in the ink, and unsolved substance may affect for causing significant increase of viscosity. Thus, the additive amount out of the range set forth above, is not preferred.

On the other hand, the water based ink containing acetylene glycol compound expressed by the foregoing general formula (1) in the shown embodiment, employs pigment as the coloring agent. By employing pigment as the coloring agent of the ink, high quality image with superior water resistance and color fastness to light and little bluing can be obtained. As pigment used in the shown embodiment may be acid pigment, basic pigment or so forth. For example, carbon black 7, titanium black, blue pigment 15, 22, 60, 64, red pigment 9, 97, 122, 123, 149, 169, 177, yellow pigment 20, 24, 86, 93, 109,110, 148, 153 and so forth. However, the pigments are not specified to those specified above.

Additive amount of the coloring agent in the shown embodiment of the water based ink is preferably in a range of 0.5 to 25 Wt%. If the coloring agent is added in excess of 25 Wt%, dispersion ability of the pigment to water is

degraded to possibly cause plugging in the ejecting portion of the printing head. On the other hand, if the additive amount of the coloring agent is less than 0.5 Wt%, it becomes impossible to obtain sufficient image density.

The shown embodiment of the water based ink contains a mixed solvent as a mixture of water as an aqueous medium and the organic solvent. As water to be used in the mixed solvent, an ion exchanged water is preferred in viewpoint of storage stability of the ink. However, distilled water available from the market may also be used.

On the other hand, as organic solvent, ethylene glycol, diethylene glycol, propylene glycol, triethylene glycol, tetraethylene glycol, polyethylene glycol MW200, polyethylene glycol MW300, polyethylene glycol MW600, ethylene glycol monomethyl ether, ethylene glycol monoethyl ether, ethylene glycol monobutyl ether, methyl carbitol, ethyl carbitol, butyl carbitol, ethyl carbitol acetate, diethyl carbitol, triethylene glycol monomethyl ether, triethylene glycol monoethyl ether, triethylene glycol monobutyl ether, glycerin, triethanol amine, formamide, dimethyl formamide, dimethyl sulfoixide, N-methyl-2-pyrrolidone, 1,3-dimethyl imidazoline and so forth may be used. However, the organic solvent to be used is not specified to those specified the above. Additive amount of the organic solvent is preferably less than or equal to 50 Wt%. The ink added the organic solvent in excess of 50 Wt%, high quality printed image cannot be obtained.

On the other hand, the shown embodiment of the water based ink may be prepared by mixing an aqueous resin as dispersing agent of pigment. As aqueous resin, a compound having weight average molecular weight less than equal to 50000 is preferred. For example, stylene-acrylic acid co-polymer, stylene-maleic acid co-polymer, stylene-metacryl acid co-polymer, stylene modified resin, cellulose derivative, acryl modified resin and so forth may be selected. However, aqueous resin may not be limited to those specified above.

On the other hand, the shown embodiment of the water based ink may be mixed with known additive. For example, as pH adjuster, potassium carbonate, sodium carbonate, triethanol amine and so forth may be mixed. Also, as mildewproofing agent, sodium benzoate or so forth may be mixed. Furthermore, as chelating agent, diethylene triamine 5 sodium acetate and so forth may be mixed. Additives to be mixed with the shown embodiment of the water base ink should not be limited to those specified above.

On the other hand, a static surface tension of the shown embodiment of the water based ink is preferably in a range of 20 to 50 dyne/cm. In the shown embodiment, static surface tension is the surface tension when the meniscus is stable. A value of dynamic surface tension can be measured by Wilhelmy type plate hanging method or so forth. When dynamic surface tension is greater than or equal to 50 dyne/cm and less than or equal to 20 dyne/cm, the ink may have low permeability and drying ability to degrade quality of the printed image.

Also, the shown embodiment of the water based ink preferably has a contact angle (static contact angle) less than or equal to 10° after 30 seconds of hitting of ink with respect to a head member of the ink-jet printing apparatus. The static contact angle may be measured by a sessile drop method (1/2 θ). On the other hand, the contact angle after 30 seconds of hitting represents contact angle between the ink-measuring substrate after 30 seconds from hitting of ink on the measuring substrate. On the other hand, the head member represents overall members forming the printing head of the ink-jet printing apparatus, such as Ni plate, SuS 304 plate and so forth. However, the head member should not be limited to those specified above. The ink having the contact angle greater than 10° after 30 seconds from hitting of the hitting of the ink with respect to the head member , wetting ability in an ink passage of the printing head is low for sucking of bubble or so forth in the ink passage to significantly degrade ejection stability.

Also, the shown embodiment of the water based ink preferably has a contact angle (dynamic contact angle) less than or equal to 30° after 0.1 seconds of hitting of ink with respect to a head member of the ink-jet printing apparatus. The dynamic contact angle may be measured by a sessile drop method (1/2 θ ). On the other hand, the contact angle after 0.1 seconds of hitting represents contact angle between the ink-measuring substrate after 0.1 seconds from hitting of ink on the measuring substrate. On the other hand, the head member represents overall members forming the printing head of the ink-jet printing apparatus, such as Ni plate, SuS 304 plate and so forth. However, the head member should not be limited to those specified above. The ink having the contact angle greater than 30° after 0.1 second from hitting of the hitting of the ink with respect to the head member , wetting ability in an ink passage of the printing head is low for sucking of bubble or so forth in the ink passage to significantly degrade ejection stability.

On the other hand, viscosity of the shown embodiment of the water based ink is preferably adjusted within a range of 1 to 10 cps. In case of the water based ink having viscosity greater than or equal to 10 cps, ink ejection stability of the printing head can be degraded to make it impossible to obtain high quality printed image. If the water based ink has viscosity less than or equal to 1 cps, ink ejection stability of the printing head can be degraded to make it impossible to obtain high quality printed image.

The shown embodiment of the water based ink is preferably adjusted pH value in a range of 6 to 10. By adjusting pH value of the water based ink within the range of 6 to 10, long period storage ability can be improved, variation of physical property, such as surface tension, viscosity and so forth can be suppressed to permit to obtain high quality printed image.

The shown embodiment of the water based ink is applicable for the ink-jet printing apparatus which performs printing by ejecting ink droplets. Here, the ink-jet printing apparatus is constructed at least with an ink-jet type printing

head having nozzle ejection portions ejecting ink droplet onto a paper as a printing medium, an ink container storing the shown embodiment of the water based ink set forth above, and ink supply means for supplying the water based ink from the ink container to the printing head. However, the shown embodiment of the water based ink may have various application. Therefore, application of the shown embodiment of the water based ink is not limited to the ink-jet printing apparatus.

Examples of the present invention will be discussed hereinafter in greater detail. It should be noted that the examples given hereinafter are merely for facilitating clear understanding of the invention and should not be taken to be limitative to the present invention.

Respective examples of water based inks were prepared according to compound ratios of respective examples. After mixing respective components of each water based ink within a beaker, filtering was effected by Omponia type JA membrane filter to prepare the water based ink to be tested. Then, static surface tension, viscosity, pH value of the water based ink thus prepared are measured. The static surface tension was measured using Wilhelmy type surface tension gauge (automatic surface tension gauge CBVP-A3, Kyowa Kaimen Kagaku K.K.) at measuring temperature of 20°C. Viscosity was measured by an automatic viscosity meter DVM-E2 (Tokimec K.K.) at measuring temperature of 20 °C. The pH value was measured by means of personal pH meter pH81 (Yokokawa Denki K.K.) at measuring temperature of 20 °C.

(Example 1)

Compound Ratio

| Ink Composition 1 | |
|---|---|
| Carbon Black | 10 parts |
| Water | 70 parts |
| Dispersant (Emulgen A-90) | 5 parts |
| Glycerin | 10 parts |
| Acetylene glycol compound 1 | 0.05 parts |

wherein the acetylene glycol compound 1 had a composition expressed by the following formula (6):

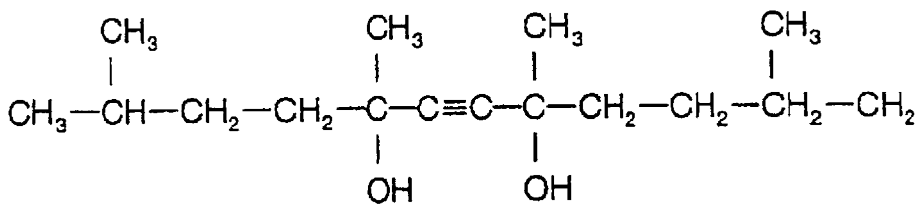

..... (6)

The ink composition of the example 1 has a property, static surface tension $\gamma$ = 36.6 dyne/cm, viscosity $\eta$ = 4.1 cps, and pH value = 7.56.

(Example 2)

Compound Ratio

| Ink Composition 2 | |
|---|---|
| Carbon Black | 10 parts |
| Water | 70 parts |
| Dispersant (Emulgen A-90) | 5 parts |
| Glycerin | 10 parts |
| Acetylene glycol compound 1 | 0.1 parts |

The ink composition of the example 2 has a property, static surface tension $\gamma$ = 34.2 dyne/cm, viscosity $\eta$ = 4.1 cps, and pH value = 7.58.

(Example 3)

Compound Ratio

| Ink Composition 3 | |
|---|---|
| Carbon Black | 10 parts |
| Water | 70 parts |
| Dispersant (Emulgen A-90) | 5 parts |
| Glycerin | 10 parts |
| Acetylene glycol compound 1 | 0.2 parts |

The ink composition of the example 3 has a property, static surface tension $\gamma$ = 32.7 dyne/cm, viscosity $\eta$ = 4.3 cps, and pH value = 7.44.

(Example 4)

Compound Ratio

| Ink Composition 4 | |
|---|---|
| Carbon Black | 10 parts |
| Water | 70 parts |
| Dispersant (Emulgen A-90) | 5 parts |
| Glycerin | 10 parts |

(continued)

| Ink Composition 4 | |
|---|---|
| Acetylene glycol compound 2 | 0.05 parts |

wherein the acetylene glycol compound 1 had a composition expressed by the following formula (7):

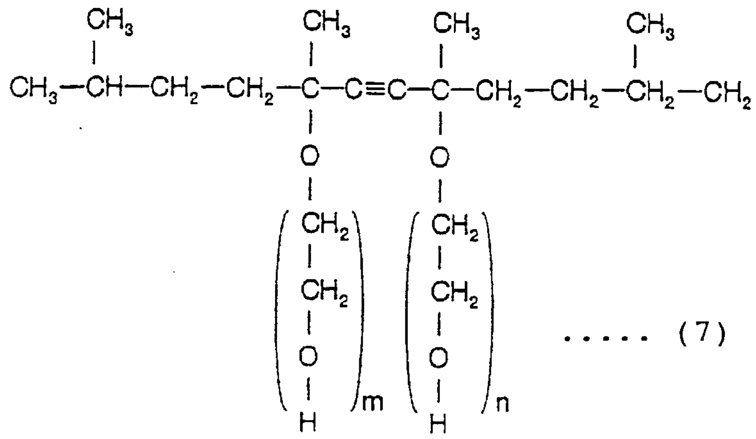

..... (7)

$m + n = 10$

The ink composition of the example 4 has a property, static surface tension γ = 37.6 dyne/cm, viscosity η = 4.7 cps, and pH value = 8.31.

(Example 5)

Compound Ratio

| Ink Composition 5 | |
|---|---|
| Carbon Black | 10 parts |
| Water | 70 parts |
| Dispersant (Emulgen A-90) | 5 parts |
| Glycerin | 10 parts |
| Acetylene glycol compound 2 | 0.1 parts |

The ink composition of the example 5 has a property, static surface tension γ = 34.2 dyne/cm, viscosity η = 4.7 cps, and pH value = 8.33.

(Example 6)

Compound Ratio

| Ink Composition 6 | |
|---|---|
| Carbon Black | 10 parts |
| Water | 70 parts |
| Dispersant (Emulgen A-90) | 5 parts |
| Glycerin | 10 parts |
| Acetylene glycol compound 1 | 0.2 parts |

The ink composition of the example 6 has a property, static surface tension $\gamma$ = 32.2 dyne/cm, viscosity $\eta$ = 4.7 cps, and pH value = 8.36.

(Example 7)

Compound Ratio

| Ink Composition 7 | |
|---|---|
| Carbon Black | 10 parts |
| Water | 70 parts |
| Dispersant (Emulgen A-90) | 5 parts |
| Glycerin | 10 parts |
| Acetylene glycol compound 3 | 0.01 parts |

wherein the acetylene glycol compound 3 had a composition expressed by the following formula (8):

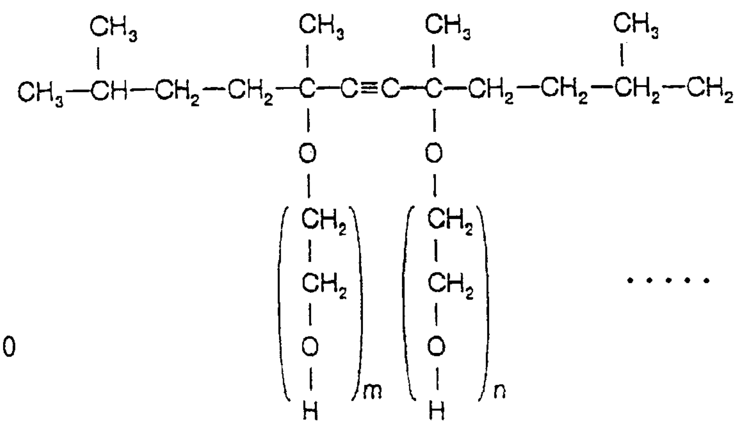

$m + n = 30$

..... (8)

The ink composition of the example 7 has a property, static surface tension $\gamma$ = 34.3 dyne/cm, viscosity $\eta$ =

4.8 cps, and pH value = 8.22.

(Example 8)

Compound Ratio

| Ink Composition 8 | |
|---|---|
| Carbon Black | 10 parts |
| Water | 70 parts |
| Dispersant (Emulgen A-90) | 5 parts |
| Glycerin | 10 parts |
| Acetylene glycol compound 3 | 0.1 parts |

The ink composition of the example 8 has a property, static surface tension γ = 31.6 dyne/cm, viscosity η =4.9 cps, and pH value = 8.01.

(Example 9)

Compound Ratio

| Ink Composition 9 | |
|---|---|
| Carbon Black | 10 parts |
| Water | 70 parts |
| Dispersant (Emulgen A-90) | 5 parts |
| Glycerin | 10 parts |
| Acetylene glycol compound 3 | 0.2 parts |

The ink composition of the example 9 has a property, static surface tension γ = 27.1 dyne/cm, viscosity η =4.9 cps, and pH value = 7.68.

Next, comparative examples will be shown.

(Comparative Example 1)

The water based ink having the following composition and removed surface active agent were prepared as the comparative example 1. After mixing respective components of each water based ink within a beaker, filtering was effected by Omponia type JA membrane filter to prepare the water based ink to be tested. Then, static surface tension, viscosity, pH value of the water based ink thus prepared are measured in the methods employed in measurements performed for the examples.

(Comparative Example 1)

Compound Ratio

| Ink Composition 10 | |
|---|---|
| Carbon Black | 10 parts |
| Water | 70 parts |
| Dispersant (Emulgen A-90) | 5 parts |
| Glycerin | 10 parts |

The ink composition of the comparative example 1 has a property, static surface tension $\gamma$ = 45.7 dyne/cm, viscosity $\eta$ = 4.6 cps, and pH value = 9.21.

(Comparative Example 2)

To the ink composition of the comparative example 1, acetylene glycol compound 4 which is expressed by the following the general formula (9)

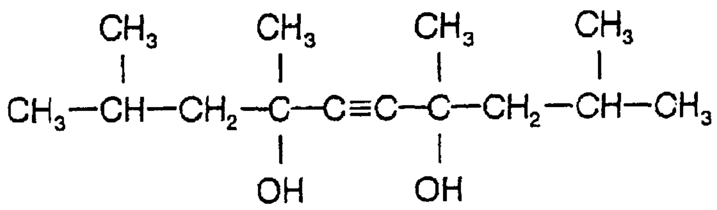

. . . . . (9)

The ink composition of the comparative example 2 has a property, static surface tension $\gamma$ = 35.4 dyne/cm, viscosity $\eta$ = 4.4 cps, and pH value = 8.66.

(Comparative Example 3)

An ink composition, in which the acetylene glycol compound 5 expressed by the following the general formula (10) is added to the ink composition of the comparative example 1 in amount of 0.2 Wt%, is taken as the comparative example 3 to measure the surface tension, viscosity and pH value in the method similar to the comparative example 1.

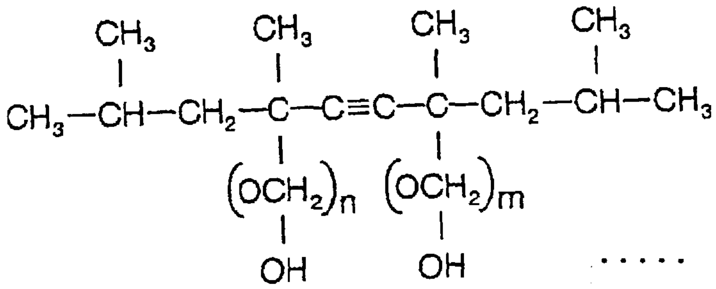

..... (10)

m + n = 4

The ink composition of the comparative example 3 has a property, static surface tension $\gamma$ = 36.8 dyne/cm, viscosity $\eta$ = 4.7 cps, and pH value = 7.84.

(Comparative Example 4)

An ink composition, in which the acetylene glycol compound 6 expressed by the following the general formula (11) is added to the ink composition of the comparative example 1 in amount of 0.2 Wt%, is taken as the comparative example 4 to measure the surface tension, viscosity and pH value in the method similar to the comparative example 1.

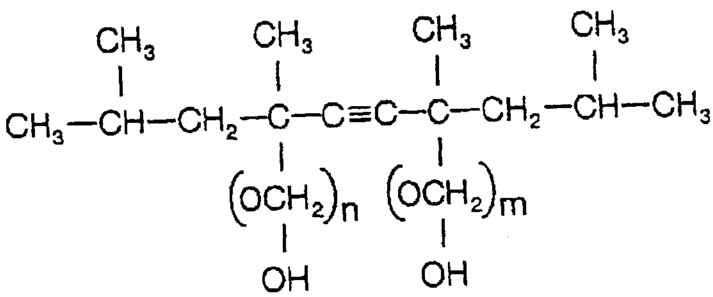

..... (11)

m + n = 10

The ink composition of the comparative example 4 has a property, static surface tension $\gamma$ = 32.3 dyne/cm, viscosity $\eta$ = 5.0 cps, and pH value = 7.91.

(Comparative Example 5)

An ink composition, in which the acetylene glycol compound 7 expressed by the following the general formula (12) is added to the ink composition of the comparative example 1 in amount of 0.2 Wt%, is taken as the comparative example 5 to measure the surface tension, viscosity and pH value in the method similar to the comparative example 1.

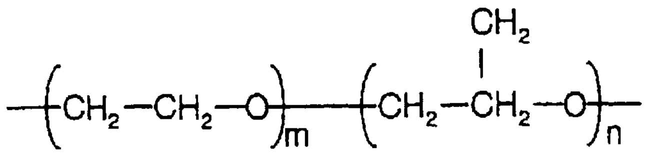

..... (12)

m + n > 30

The ink composition of the comparative example 5 has a property, static surface tension $\gamma$ = 30.9 dyne/cm, viscosity $\eta$ = 5.3 cps, and pH value = 8.96.

Next, discussion will be given for result of evaluation.

(Evaluation Criterion 1)

The contact angle after 30 seconds from hitting the SUS 304 plate is measured as the static contact angle. On the other hand, as the measuring substrate, the SUS plate (surface roughness ▽▽▽▽) was used. The measuring temperature was 20 °C.

(Evaluation Criterion 2)

The contact angle after 0.1 seconds from hitting the SUS 304 plate is measured as the static contact angle. On the other hand, as the measuring substrate, the SUS plate (surface roughness ▽▽▽▽) was used. The measuring temperature was 20 °C.

(Evaluation Criterion 3)

Printing test is performed by means of a piezo type ink-jet printer having resolution of 720 dpi to check drying period of the print sample to test driving ability. As a printing paper, a recycled paper available from the market was used. If the drying period is less than or equal to 10 seconds, the evaluation result was good ( ◯ ), and otherwise, the evaluation result was bad (X).

(Evaluation Criterion 4)

Ejection stability was checked by performing printing for 100 sheets of A4 paper. If printed images on all of 100 sheets were good, the evaluation result was good ( ◯ ), and otherwise, the evaluation result was bad (X).

(Evaluation Criterion 5)

Storage stability of the water based ink composition was checked by the following method. Namely, the water based ink is stored in a polyethylene container for one month at 60 °C to check variation of surface tension, viscosity and pH value and presence or absence of precipitated substance. If physical property causes little change and precipitated substance was not observed, the evaluation result was good ( ◯ ), and otherwise, the evaluation result was bad (X).

Result of Evaluation

Result of evaluation of respective examples and comparative examples are shown in the following table 1.

TABLE 1

| | Static Contact Angle | Dynamic Contact Angle | Drying Ability | Ejection Stability | Storage Stability |
|---|---|---|---|---|---|
| Ex. 1 | 16.6 | 31.1 | ○ | ○ | △ |
| Ex. 2 | 8.7 | 27.4 | ○ | ○ | ○ |
| Ex. 3 | 6.2 | 27.1 | ○ | ○ | ○ |
| Ex. 4 | 19.1 | 24.0 | ○ | △ | ○ |
| Ex. 5 | 8.7 | 19.4 | ○ | ○ | ○ |
| Ex. 6 | <5.0 | 9.9 | ○ | ○ | ○ |
| Ex. 7 | 28.3 | 31.4 | △ | △ | △ |
| Ex. 8 | 25.4 | 28.1 | ○ | ○ | ○ |
| Ex. 9 | 20.6 | 28.1 | ○ | ○ | ○ |
| Comp. 1 | 37.1 | 45.6 | X | X | X |
| Comp. 2 | 13.4 | 29.1 | X | △ | △ |
| Comp. 3 | 11.8 | 30.9 | △ | △ | △ |
| Comp. 4 | 14.7 | 34.3 | △ | △ | △ |
| Comp. 5 | 37.1 | 44.6 | X | X | X |

As set forth above, with the shown embodiment of the water based ink, high ejection stability of the water based ink can be achieved while pigment is employed of coloring agent.

On the other hand, with the present invention, the water based ink can realize high printing quality superior in water resistance and color fastness to light, without causing bluing on the paper.

As well, the water based ink exhibits superior storage ability.

SECOND EMBODIMENT

(Water Based Ink)

The second embodiment of the water based ink contains at least one kind of acetylene glycol type compound expressed by the following the general formula (13):

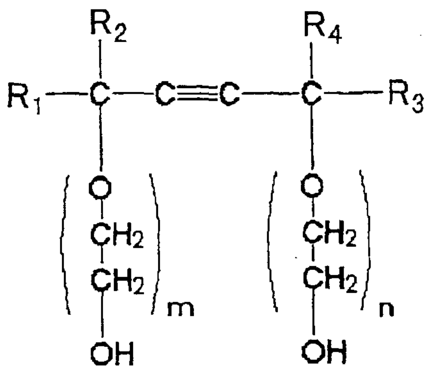

..... (13)

wherein $R_1$ and $R_3$ are alkyl group with branch of carbon number 4 to 17, $R_2$ and $R_4$ are alkyl group of carbon number 1 to 10, m and n are 0 or positive integer,
and at least one kind of alkylene oxide polymer expressed by the following the general formula (14):

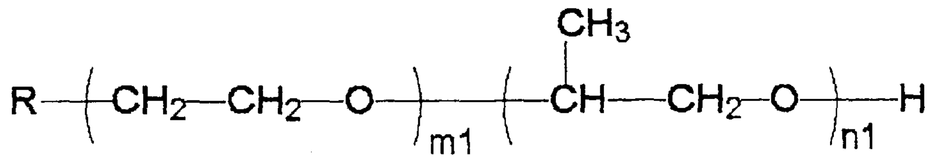

..... (14)

wherein m1 and n1 are 0 or positive integer, R is one selected among H, alkyl group of carbon number 1 to 10 and alkoxyl group of carbon number 1 to 10.

In the preferred composition, the second embodiment of the water based ink contains acetylene glycol type compound and alkylene oxide polymer in ratio of 0.01 to 10 : 0.01 to 5 by weight.

The shown embodiment of the water based ink contains a pigment as the coloring agent. Preferably, the water based ink contains the acetylene glycol type compound and pigment in a ratio of 0.01 to 10.0 : 0.1 to 25 by weight.

On the other hand, the shown embodiment of the water based ink may contain at least one kind of organic solvent. Preferably, the water based ink contains acetylene glycol type compound and the organic solvent in a ratio of 0.01 to 10 : 5 to 50 by weight. Also, the shown embodiment of the water based ink contains water. A ratio of acetylene glycol type compound and water by weight is in a range of 0.01 to 10 : 10 to 94.88.

(Acetylene Glycol type Compound expressed by formula (13))

As set forth, in the general formula (13), R1 and R3 are alkyl group with branch of carbon number 4 to 17, in which carbon atoms are bound to have at least one branch. Preferably, alkyl group with branch may have main chain of carbon atoms bound not to have a branch, to which main chain, alkyl group is bound for causing at least one branch.

More preferably, $R_1$ and $R_3$ in the foregoing general formula (13) is alkyl group, in which alkyl group of carbon number 1 to 10 (further preferably carbon number 1 to 5) is bound to the main chain of carbon atoms of carbon number 3 to 7 having chain combination to have no branch, to cause branch. Position of carbon atom in the main chain, to which alkyl group is bound, may be selected at most distant position from a triple bond portion of carbon in the foregoing general formula (13), as a condition for causing branch. Alkyl group to be bound to the main chain may be alkyl group without branch or alkyl group with branch. Alkyl group of $R_1$ and $R_3$ in the foregoing general formula (13) may be the same alkyl group.

$R_2$ and $R_4$ in the general formula (13) is alkyl group of carbon number 1 to 10, and more preferably alkyl group of carbon number 1 to 5. Alkyl group may be alkyl group without branch or alkyl with branch. Alkyl group of $R_2$ and $R_4$ in the foregoing general formula (13) may be the same alkyl group.

Acetylene glycol type compound expressed by the foregoing general formula (13) may be a compound expressed by the following the general formula (15):

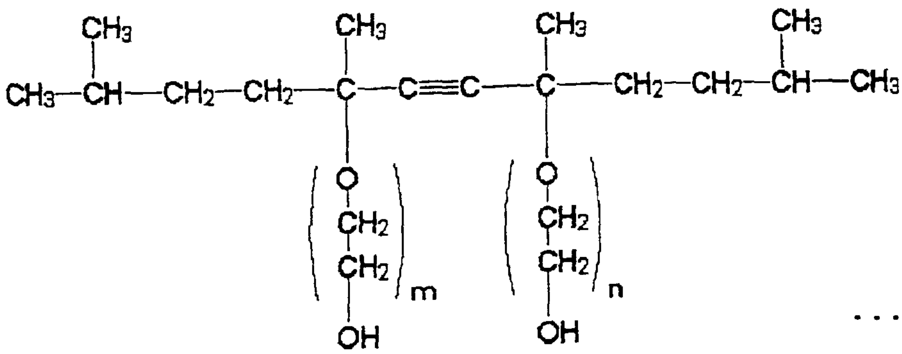

..... (15)

wherein m and n are 0 or positive integer.

In the alternative, acetylene glycol type compound expressed by the foregoing general formula (13) may be a compound 1 expressed by the following the general formula (16):

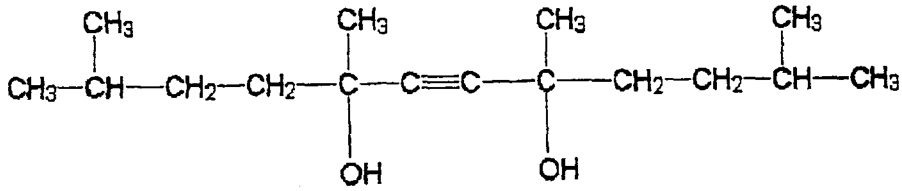

..... (16)

In view of solubility of ink, the preferred acetylene glycol type compound may be acetylene glycol added ethylene oxide as expressed by the following formula (17):

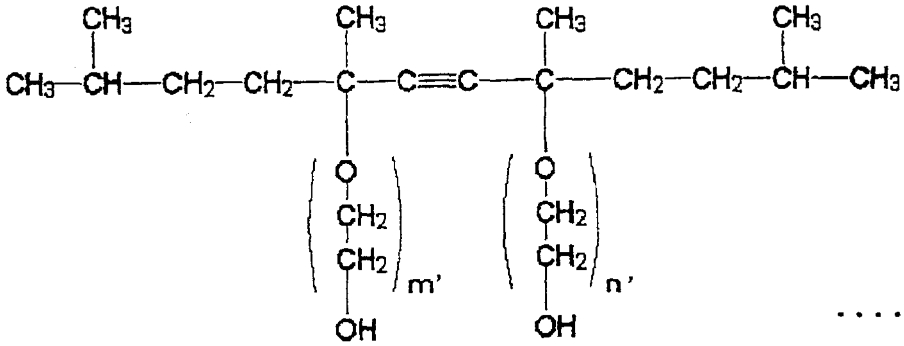

..... (17)

wherein m' and n' are integer greater than or equal to 1.

Acetylene glycol added ethylene oxide as expressed by the foregoing general formula (17) may not be limited and can be any of acetylene glycol compound added ethylene oxide as expressed by the foregoing general formula (16) as long as molecular weight is greater than or equal to 30 and acetylene bond is present. For example, any compound group of acetylene glycol as expressed by the following the general formulae:

Compound 2 expressed by:

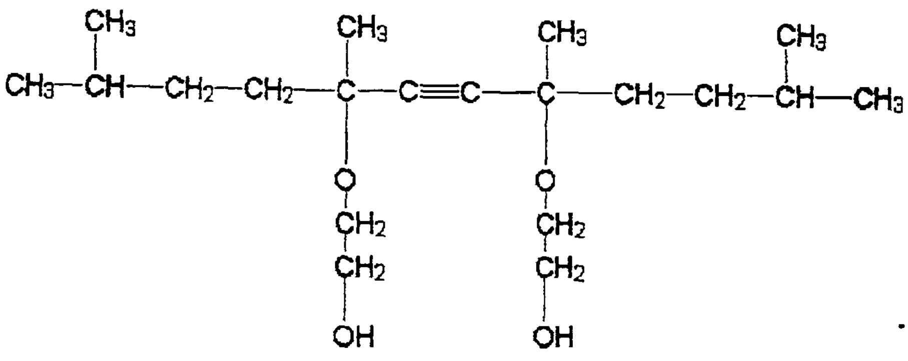

..... (18)

Compound 3 expressed by:

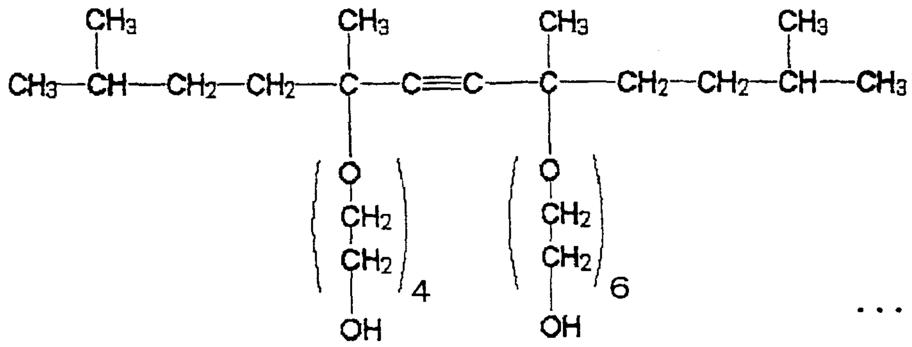

..... (19)

Among acetylene glycol compound expressed by the foregoing general formulae (13) and (15), acetylene glycol compound wherein m + n is in a range of 1 to 30 is preferred in viewpoint of water resistance of the ink and driving ability of the printed paper surface.

Additive amount of the acetylene glycol compound expressed by the foregoing general formula (13) to the water based ink composition is preferably in a range of 0.01 to 10. 0 Wt% with respect to a total amount of the water based ink composition. When the additive amount of the acetylene glycol compound expressed by the foregoing general formula (13) in the water based ink is less than 0.01 Wt%, effect for improving ink ejection stability becomes insufficient. On the other hand, when additive amount of acetylene glycol compound expressed by the foregoing general formula (13) to the water based ink composition is in excess of 10.0 Wt%, viscosity of the ink can be increased significantly to possibly cause ejection failure.

(Alkylene Oxide Polymer Expressed by The general formula (14))

Normally, water solubility of acetylene glycol compound expressed by the foregoing general formula (13) is low. For example, when acetylene glycol compound of the general formula (13) is added to the water based ink containing water in about 70 Wt%, solubility limit is about 0.5 Wt%.

When acetylene glycol compound of the general formula (13) is added to the water based ink under a environmental condition where solubility limit is low, acetylene glycol compound of the general formula (13) may precipitate as insoluble matter in the ink to possibly cause ejection failure. Therefore, it becomes necessary to enhance solubility of acetylene glycol compound of the general formula (13) to the water based ink. Therefore, the shown embodiment employs the compound (alkylene oxide polymer) as solving coadjuvant for solving acetylene glycol compound of the general formula (13) to the water based ink.

Employing the compound of the general formula (14) as solving coadjuvant and adding a polymer of the compound of the general formula (13) and the compound of the general formula (14) to the water based ink, solubility of the compound of the general formula (13) can be improved significantly. Furthermore, in the shown embodiment, the compound of the general formula (14) is also used as pigment dispersing agent. Normally, in case of the pigment ink, pigment particle cannot be dispersed in water as primary solvent to possibly cause plugging upon ejection. In case of the pigment ink containing the compound of the general formula (14), dispersing ability of the pigment particle as coloring agent becomes superior to certainly provide storage stability and avoid plugging upon ejection to achieve high ejection stability.

The compound of the general formula (14) may be not specified as long as it is one of ethylene oxide polymer, propylene oxide polymer and ethylene oxide-propylene oxide co-polymer. On the other hand, in the shown embodiment, additive amount of the polymer of the general formula (14) in the water based ink is preferably in a range of 0.01 to 5.0 Wt%. If the additive amount of the polymer of the general formula (14) is less than 0.01 WT%, effect as pigment dispersing agent and solving adjuvant possibly become insufficient. On the other hand, when the polymer of the general formula (14) is added in excess of 5.0 Wt%, viscosity of the water based ink may be increased significantly.

(Pigment)

In the shown embodiment of the water based ink, the coloring agent is pigment. By employing pigment as coloring agent of the ink, water resistance and color fastness to light of the printed image can be improved as intended by the present invention. As pigment used in the shown embodiment may be acid pigment, basic pigment or so forth.

For example, carbon black 7, titanium black, blue pigment 15, 22, 60, 64, red pigment 9, 97, 122, 123, 149, 169, 177, yellow pigment 20, 24, 86, 93, 109, 110, 148, 153 and so forth. However, the pigments are not specified to those specified above.

Additive amount of the coloring agent in the shown embodiment of the water based ink is preferably in a range of 1 to 25 Wt%. If the coloring agent is added in excess of 25 Wt%, dispersion ability of the pigment to water is degraded to possibly cause plugging in the ejecting portion of the printing head. On the other hand, if the additive amount of the coloring agent is less than 0.5 Wt%, it becomes impossible to obtain sufficient image density.

(Aqueous medium)

In the shown embodiment of the water based ink, as an aqueous medium, a mixed solvent consisted of a combination of water and organic solvent is used. As water to be used in the mixed solvent, an ion exchanged water is preferred in viewpoint of storage stability of the ink. However, distilled water available from the market may also be used.

(Organic Solvent)

As organic solvent, ethylene glycol, diethylene glycol, propylene glycol, triethylene glycol, tetraethylene glycol, polyethylene glycol MW (weight average molecular weight) 200, polyethylene glycol MW300, polyethylene glycol MW600, ethylene glycol monomethyl ether, ethylene glycol monoethyl ether, ethylene glycol monobutyl ether, methyl carbitol, ethyl carbitol, butyl carbitol, ethyl carbitol acetate, diethyl carbitol, triethylene glycol monomethyl ether, triethylene glycol monoethyl ether, triethylene glycol monobutyl ether, glycerin, triethanol amine, formamide, dimethyl formamide, dimethyl sulfoixide, N-methyl-2-pyrrolidone, 1,3-dimethyl imidazoline and so forth may be used. However, the organic solvent to be used is not specified to those specified the above.

There organic solvents are used as penetrating agent. Additive amount of the organic solvent is preferably less than or equal to 50 Wt%. The ink added the organic solvent in excess of 50 Wt%, high quality printed image cannot be obtained, and possibly cause plugging of the ink upon ejection and can be a cause of ejection failure.

(Additives)

The shown embodiment of the water based ink may be prepared by mixing an aqueous resin as dispersing agent of pigment. As aqueous resin, a compound having weight average molecular weight less than equal to 50000 is preferred. For example, stylene-acrylic acid co-polymer, stylene-maleic acid co-polymer, stylene-metacryl acid co-polymer, stylene modified resin, cellulose derivative, acryl modified resin and so forth may be selected. However, aqueous resin may not be limited to those specified above.

On the other hand, the shown embodiment of the water based ink may be mixed with known additive. For example, as pH adjuster, potassium carbonate, sodium carbonate, triethanol amine and so forth may be mixed. Also, as mildewproofing agent, sodium benzoate or so forth may be mixed. Furthermore, as chelating agent, diethylene triamine 5 sodium acetate and so forth may be mixed. Additives to be mixed with the shown embodiment of the water base ink should not be limited to those specified above.

(Property of Water Based Ink)

On the other hand, a static surface tension of the shown embodiment of the water based ink is preferably in a range of 20 to 50 dyne/cm at 20 °C In the shown embodiment, static surface tension is the surface tension when the meniscus is stable. A value of dynamic surface tension can be measured by Wilhelmy type plate hanging method or so forth. When dynamic surface tension is greater than or equal to 50 dyne/cm or less than or equal to 20 dyne/cm, the ink may have low permeability and drying ability to degrade quality of the printed image.

Also, the shown embodiment of the water based ink preferably has a contact angle (static contact angle) less than or equal to 10° after 30 seconds of hitting of ink with respect to a head member of the ink-jet printing apparatus. The static contact angle may be measured by a sessile drop method (1/2 θ). On the other hand, the contact angle after 30 seconds of hitting represents contact angle between the ink-measuring substrate after 30 seconds from hitting of ink on the measuring substrate. On the other hand, the head member represents overall members forming the printing head of the ink-jet printing apparatus, such as Ni plate, SuS 304 plate and so forth. However, the head member should not be limited to those specified above. The ink having the contact angle greater than 10° after 30 seconds from hitting of the hitting of the ink with respect to the head member , wetting ability in an ink passage of the printing head is low for sucking of bubble or so forth in the ink passage to significantly degrade ejection stability.

Also, the shown embodiment of the water based ink preferably has a contact angle (dynamic contact angle) less than or equal to 30° after 0.1 seconds of hitting of ink with respect to a head member of the ink-jet printing apparatus. The dynamic contact angle may be measured by a sessile drop method (1/2 θ ). On the other hand, the contact angle after 0.1 seconds of hitting represents contact angle between the ink-measuring substrate after 0.1 seconds from hitting of ink on the measuring substrate. On the other hand, the head member represents overall members forming the printing head of the ink-jet printing apparatus, such as Ni plate, SuS 304 plate and so forth. However, the head member should not be limited to those specified above. The ink having the contact angle greater than 30° after 0.1 second from hitting of the hitting of the ink with respect to the head member, wetting ability in an ink passage of the printing head is low for sucking of bubble or so forth in the ink passage to significantly degrade ejection stability.

On the other hand, viscosity of the shown embodiment of the water based ink is preferably adjusted within a range of 1 to 10 cps at 20 °C. In case of the water based ink having viscosity greater than or equal to 10 cps, ink ejection stability of the printing head can be degraded to make it impossible to obtain high quality printed image. If the water based ink has viscosity less than or equal to 1 cps, ink ejection stability of the printing head can be degraded to make it impossible to obtain high quality printed image.

The shown embodiment of the water based ink is preferably adjusted pH value in a range of 6.5 to 10. By adjusting pH value of the water based ink within the range of 6.5 to 10, long period storage ability can be improved, variation of physical property, such as surface tension, viscosity and so forth can be suppressed to permit to obtain high quality printed image.

(Ink Container)

An ink container for storing the shown embodiment of the water based ink should has an ink chamber for storing the ink. At least a portion of the ink chamber in direct contact with the ink should be formed with an inert material to the water based ink composition. The inert material to the shown embodiment of the water based ink composition is the material not dissolved by the shown embodiment of the water based ink and should not affect for the shown embodiment of the water based ink, such as alternation or so forth, while storing therein. Thus, the material of the ink chamber may be selected among resin, metal ceramics inert to the water based ink to which the present invention directed to.

(Ink-Jet Printing Apparatus)

The shown embodiment of the water based ink is applicable for the ink-jet printing apparatus which performs printing by ejecting ink droplets. Here, the ink-jet printing apparatus is constructed at least with an ink-jet type printing head having nozzle ejection portions ejecting ink droplet onto a paper as a printing medium, an ink container storing the shown embodiment of the water based ink set forth above, and ink supply means for supplying the water based ink from the ink container to the printing head. However, the shown embodiment of the water based ink may have various application. Therefore, application of the shown embodiment of the water based ink is not limited to the ink-jet printing apparatus.

Examples of the present invention will be discussed hereinafter in greater detail. It should be noted that the examples given hereinafter are merely for facilitating clear understanding of the invention and should not be taken to be limitative to the present invention.

Respective examples of water based inks were prepared according to compound ratios of respective examples. After mixing respective components of each water based ink within a beaker, filtering was effected by Omponia type JA membrane filter to prepare the water based ink to be tested. Then, static surface tension, viscosity, pH value of the water based ink thus prepared are measured. The static surface tension was measured using Wilhelmy type surface tension gauge (automatic surface tension gauge CBVP-A3, Kyowa Kaimen Kagaku K.K.) at measuring temperature of 20 °C. Viscosity was measured by an automatic viscosity meter DVM-E2 (Tokimec K.K.) at measuring temperature of 20 °C. The pH value was measured by means of personal pH meter pH81 (Yokokawa Denki K.K.) at measuring temperature of 20 °C.

(Example 21)

Compound Ratio

| Ink Composition 21 | |
|---|---|
| carbon black | 10 parts |

(continued)

| Ink Composition 21 | |
|---|---|
| water | 75 parts |
| dispersant | 5 parts |
| glycerin | 10 parts |
| Acetylene glycol compound 4 | 0.5 parts |
| Ethylene Oxide Polymer (MW 5000) | 0.02 parts |

The acetylene glycol compound 4 may be expressed by the following general formula (20):

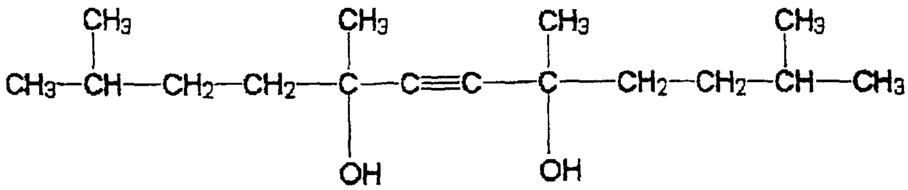

..... (20)

The ink composition of the example 21 has a property, static surface tension γ = 27.6 dyne/cm, viscosity η = 4.6 cps, and pH value = 8.11.

(Example 22)

Compound Ratio

| Ink Composition 22 | |
|---|---|
| carbon black | 10 parts |
| water | 75 parts |
| dispersant | 5 parts |
| glycerin | 10 parts |
| Acetylene glycol compound 4 | 1.0 parts |
| Ethylene Oxide Polymer (MW 5000) | 0.05parts |

The ink composition of the example 22 has a property, static surface tension γ = 26.4 dyne/cm, viscosity η = 4.8 cps, and pH value = 8.24.

(Example 23)

Compound Ratio

| Ink Composition 23 | |
|---|---|
| carbon black | 10 parts |
| water | 75 parts |
| dispersant | 5 parts |
| glycerin | 10 parts |
| Acetylene glycol compound 4 | 2.0 parts |
| Ethylene Oxide Polymer (MW 5000) | 0.05parts |

The ink composition of the example 23 has a property, static surface tension $\gamma$ = 25.8 dyne/cm, viscosity $\eta$ = 4.9 cps, and pH value = 8.01.

(Example 24)

Compound Ratio

| Ink Composition 24 | |
|---|---|
| carbon black | 10 parts |
| water | 75 parts |
| dispersant | 5 parts |
| glycerin | 10 parts |
| Acetylene glycol compound 5 | 0.05 parts |
| Ethylene Oxide Polymer (MW 5000) | 0.02 parts |

The acetylene glycol compound 5 may be expressed by the following general formula (21):

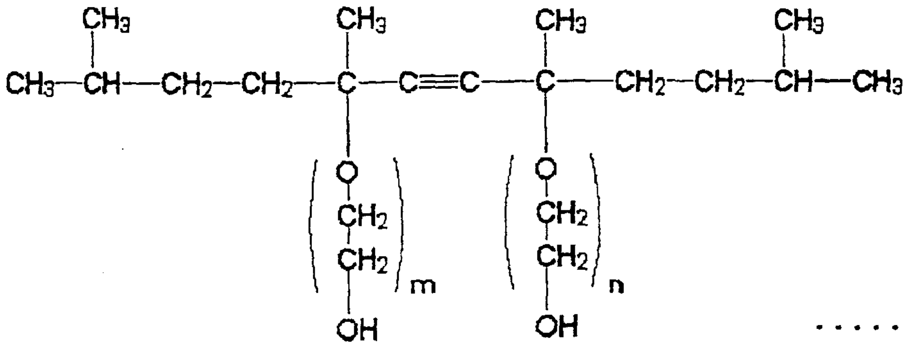

..... (21)

wherein m + n = 10

The ink composition of the example 24 has a property, static surface tension γ = 29.1 dyne/cm, viscosity η = 4.9 cps, and pH value = 7.54.

(Example 25)

Compound Ratio

| Ink Composition 25 | |
|---|---|
| carbon black | 10 parts |
| water | 75 parts |
| dispersant | 5 parts |
| glycerin | 10 parts |
| Acetylene glycol compound 5 | 1.0 parts |
| Ethylene Oxide Polymer (MW 5000) | 0.05parts |

The ink composition of the example 25 has a property, static surface tension γ = 27.3 dyne/cm, viscosity η = 5.2 cps, and pH value = 7.94.

(Example 26)

Compound Ratio

| Ink Composition 26 | |
|---|---|
| carbon black | 10 parts |
| water | 75 parts |
| dispersant | 5 parts |

(continued)

| Ink Composition 26 | |
|---|---|
| glycerin | 10 parts |
| Acetylene glycol compound 5 | 2.0 parts |
| Ethylene Oxide Polymer (MW 5000) | 0.05parts |

The ink composition of the example 26 has a property, static surface tension γ = 26.3 dyne/cm, viscosity η = 5.3 cps, and pH value = 8.02.

(Example 27)

Compound Ratio

| Ink Composition 27 | |
|---|---|
| carbon black | 10 parts |
| water | 75 parts |
| dispersant | 5 parts |
| glycerin | 10 parts |
| Acetylene glycol compound 5 | 2.0 parts |
| Propylene Oxide Polymer (MW 5000) | 0.05parts |

The ink composition of the example 27 has a property, static surface tension γ = 24.9 dyne/cm, viscosity η =5.6 cps, and pH value = 7.87.

(Example 28)

Compound Ratio

| Ink Composition 28 | |
|---|---|
| carbon black | 10 parts |
| water | 75 parts |
| dispersant | 5 parts |
| glycerin | 10 parts |
| Acetylene glycol compound 5 | 2.0 parts |
| Ethylene Oxide-Propylene Oxide Co-polymer (MW 10000) | 0.05parts |

The ink composition of the example 28 has a property, static surface tension γ = 27.2 dyne/cm, viscosity η =6.2 cps, and pH value = 7.52.

(Example 29)

Compound Ratio

| Ink Composition 29 | |
|---|---|
| carbon black | 10 parts |
| water | 75 parts |
| dispersant | 5 parts |
| glycerin | 10 parts |
| Acetylene glycol compound 6 | 0.5 parts |
| Ethylene Oxide Polymer (MW 5000) | 0.02parts |

The acetylene glycol compound 6 may be expressed by the following general formula (22):

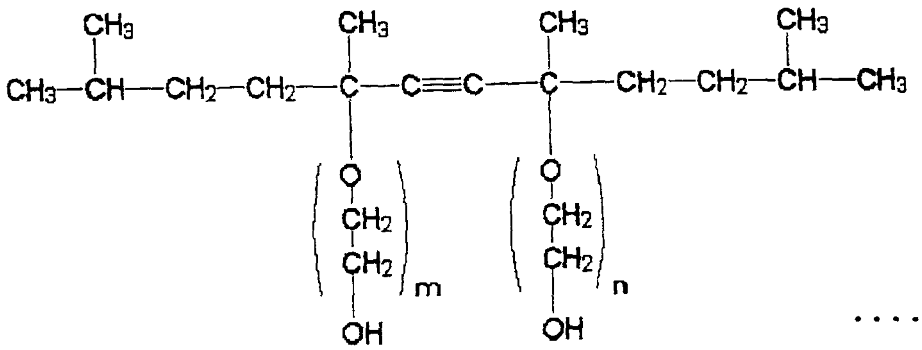

..... (22)

wherein m + n = 30

The ink composition of the example 29 has a property, static surface tension γ = 26.1 dyne/cm, viscosity η = 5.4 cps, and pH value = 8.31.

(Example 30)

Compound Ratio

| Ink Composition 30 | |
|---|---|
| carbon black | 10 parts |
| water | 75 parts |
| dispersant | 5 parts |

(continued)

| Ink Composition 30 | |
|---|---|
| glycerin | 10 parts |
| Acetylene glycol compound 6 | 1.0 parts |
| Ethylene Oxide Polymer (MW 5000) | 0.05parts |

The ink composition of the example 30 has a property, static surface tension γ = 25.8 dyne/cm, viscosity η = 5.5 cps, and pH value = 8.11.

(Example 31)

Compound Ratio

| Ink Composition 31 | |
|---|---|
| carbon black | 10 parts |
| water | 75 parts |
| dispersant | 5 parts |
| glycerin | 10 parts |
| Acetylene glycol compound 4 | 2.0 parts |
| Ethylene Oxide Polymer (MW 5000) | 0.05parts |

The ink composition of the example 31 has a property, static surface tension γ = 24.9 dyne/cm, viscosity η = 5.6 cps, and pH value = 8.22.

(Comparative Example 21)

The water based ink having the following composition and removed surface active agent were prepared as the comparative example 21. After mixing respective components of each water based ink within a beaker, filtering was effected by Omponia type JA membrane filter to prepare the water based ink to be tested. Then, static surface tension, viscosity, pH value of the water based ink thus prepared are measured in the methods employed in measurements performed for the examples.

Compound Ratio

| Ink Composition 32 | |
|---|---|
| Carbon Black | 10 parts |
| Water | 75 parts |
| Dispersant | 5 parts |
| Glycerin | 10 parts |

The ink composition of the comparative example 21 has a property, static surface tension γ = 45.7 dyne/cm,

viscosity η = 4.6 cps, and pH value = 9.21.

(Comparative Example 22)

To the ink composition of the comparative example 21, the acetylene glycol compound 4 is added in amount of 0.2 Wt% to prepare the ink composition of the comparative example 22, and then surface tension, viscosity and pH are measured in the similar manner as the comparative example 21.

The ink composition of the comparative example 22 has a property, static surface tension γ = 32.4 dyne/cm, viscosity η = 4.4 cps, and pH value = 8.10.

(Comparative Example 23)

To the ink composition of the comparative example 21, the acetylene glycol compound 4 is added in amount of 2.0 Wt% to prepare the ink composition of the comparative example 23. In this ink composition, since large amount of insoluble matter was present for low dispersion ability. Therefore, ejection test could not be performed.

(Comparative Example 24)

To the ink composition of the comparative example 21, the acetylene glycol compound 5 is added in amount of 0.2 Wt% to prepare the ink composition of the comparative example 24, and then surface tension, viscosity and pH are measured in the similar manner as the comparative example 21.

The ink composition of the comparative example 24 has a property, static surface tension γ = 36.8 dyne/cm, viscosity η = 4.7 cps, and pH value = 7.84.

(Comparative Example 25)

To the ink composition of the comparative example 21, the acetylene glycol compound 5 is added in amount of 2.0 Wt% to prepare the ink composition of the comparative example 25. In this ink composition, since large amount of insoluble matter was present for low dispersion ability. Therefore, ejection test could not be performed.

(Comparative Example 26)

To the ink composition of the comparative example 21, the acetylene glycol compound 6 is added in amount of 0.2 Wt% to prepare the ink composition of the comparative example 26, and then surface tension, viscosity and pH are measured in the similar manner as the comparative example 21.

The ink composition of the comparative example 26 has a property, static surface tension γ = 29.3 dyne/cm, viscosity η = 5.1 cps, and pH value = 7.12.

(Comparative Example 27)

To the ink composition of the comparative example 21, the acetylene glycol compound 6 is added in amount of 2.0 Wt% to prepare the ink composition of the comparative example 27. In this ink composition, since large amount of insoluble matter was present for low dispersion ability. Therefore, ejection test could not be performed.

(Comparative Example 28)

To the ink composition of the comparative example 21, a compound expressed by the following general formula (23):

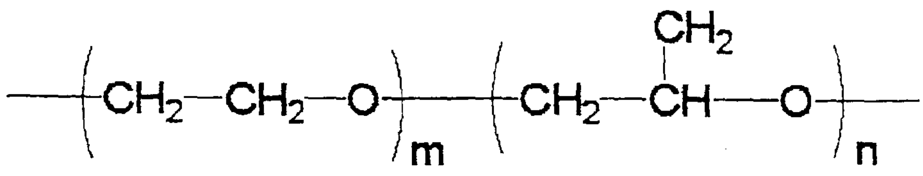

..... (23)

was added in amount of 0.2 Wt%, and then surface tension, viscosity and pH are measured in the similar manner as the comparative example 21 set forth above. It should be noted that in the foregoing general formula, $m + n > 30$ .

The ink composition of the comparative example 28 has a property, static surface tension $\gamma$ = 30 .9 dyne/cm, viscosity $\eta$ = 5.3 cps, and pH value = 8.96.

(Evaluation Criterion 1)

The contact angle after 30 seconds from hitting the SUS 304 plate is measured as the static contact angle. The measuring temperature was 20 °C.

(Evaluation Criterion 2)

The contact angle after 0. 1 seconds from hitting the SUS 304 plate is measured as the static contact angle. The measuring temperature was 20 °C.

(Evaluation Criterion 3)

Printing test is performed by means of a piezo type ink-jet printer having resolution of 720 dpi to check color definition. As a printing paper, a recycled paper available from the market was used.

1) Bluing Test

Printed image was checked to evaluate as

○: not cause bluing;

△: slightly cause bluing;

x: cause bluing.

2) Drying Ability Test

Prying period of the print sample was checked to evaluate as

○: drying period is less than or equal to 10 seconds;
△: drying period is longer than 10 seconds and less than or equal to 20 seconds; and
x: drying period is longer than 20 seconds.

3) Water Resistance Test

The print sample was dipped in water for 30 seconds and then variation of the image density was checked. Color density was measured by colorimeter (L*, a*, b*) to make judgment of variation ratio ΔE of color density was made.

$$\Delta E = \sqrt{((A^* - a^*)^2 + (B^* - b^*)^2 + (C^* - c^*)^2)}$$

○: ΔE is less than or equal to 5;

△: ΔE is greater than or equal to 5 and less than 10;

x: is greater than or equal to 10.

(Evaluation Criterion 4)

Ejection stability was checked by performing printing for 100 sheets of A4 paper.

○: all printed images are good;

△: a few abnormal images are present;

x: large number of abnormal images are present.

(Evaluation Criterion 5)

Storage stability of the water based ink composition was checked by the following method. Namely, the water based ink is stored in a polyethylene container for one month at 60 °C to check variation of surface tension, viscosity and pH value and presence or absence of precipitated substance.

○ : physical property causes little change and precipitated substance was not observed;
△ : physical property causes change and a little precipitated substance was observed;
x: physical property causes change and a large amount of precipitated substance was observed.

The following table 2 shows evaluation results of static contact angle, dynamic contact angle, bluing, drying period and water resistance in the foregoing embodiments and comparative examples. The following table 3 shows evaluation results of ejection stability and storage stability.

TABLE 2

| | Static Contact Angle | Dynamic Contact Angle | Bluing | Drying Period | Water Resistance |
|---|---|---|---|---|---|
| Ex. 21 | 8.8 | 25.9 | ○ | ○ | ○ |
| Ex. 22 | 6.7 | 25.1 | ○ | ○ | ○ |
| Ex. 23 | 11.3 | 23.5 | ○ | ○ | ○ |
| Ex. 24 | 8.6 | 19.7 | ○ | ○ | ○ |
| Ex. 25 | <5.0 | 18.4 | ○ | ○ | ○ |
| Ex. 26 | <5.0 | 17.1 | ○ | ○ | ○ |
| Ex. 27 | <5.0 | 17.9 | ○ | ○ | ○ |
| Ex. 28 | <5.0 | 17.0 | ○ | ○ | ○ |
| Ex. 29 | 9.6 | 28.6 | ○ | ○ | △ |
| Ex. 30 | 7.7 | 25.5 | ○ | ○ | △ |
| Ex. 31 | <5.0 | 22.6 | ○ | ○ | △ |
| Comp. 21 | 37.1 | 45.6 | X | X | X |
| Comp. 22 | - | - | - | - | - |
| Comp. 23 | 11.8 | 28.1 | △ | △ | ○ |
| Comp. 24 | - | - | - | - | - |
| Comp. 25 | 10.6 | 28.7 | ○ | △ | △ |
| Comp. 26 | - | - | - | - | - |
| Comp. 27 | 13.6 | 32.5 | △ | ○ | △ |

TABLE 2 (continued)

| | Static Contact Angle | Dynamic Contact Angle | Bluing | Drying Period | Water Resistance |
|---|---|---|---|---|---|
| Comp. 28 | 37.1 | 44.6 | X | △ | X |

TABLE 3

| | Ejection Stability | Storage Stability |
|---|---|---|
| Ex. 21 | ○ | ○ |
| Ex. 22 | ○ | ○ |
| Ex. 23 | ○ | ○ |
| Ex. 24 | ○ | ○ |
| Ex. 25 | ○ | ○ |
| Ex. 26 | ○ | ○ |
| Ex. 27 | ○ | ○ |
| Ex. 28 | ○ | ○ |
| Ex. 29 | ○ | ○ |
| Ex. 30 | ○ | ○ |
| Ex. 31 | ○ | ○ |
| Comp. 21 | X | ○ |
| Comp. 22 | ○ | X |
| Comp. 23 | - | - |
| Comp. 24 | △ | △ |
| Comp. 25 | - | - |
| Comp. 26 | ○ | X |
| Comp. 27 | - | - |
| Comp. 28 | X | X |

By the shown embodiment set forth above, the following effects are achieved.

The first effect of the shown embodiment of the water based ink is to achieve superior water resistance and color fastness to light, high color density, and little bluing, while to achieve superior ejection stability.

The reason is that the water based ink contains at least one kind of acetylene glycol type compound expressed by the general formula (20), at least one kind of alkylene oxide polymer expressed by the general formula (21), pigment, and water.

The second effect of the shown embodiment of the water based ink is to achieve high drying speed on the paper surface, superior permeability or penetration ability, little offset and superior storage ability. This can also be achieved by the ink composition of the shown embodiment.

Although the present invention has been illustrated and described with respect to exemplary embodiment thereof, it should be understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. A water based ink composition composed of at least water, pigment as coloring agent, an organic solvent, a surface

active agent and at least one kind of compound expressed by the following general formula (I):

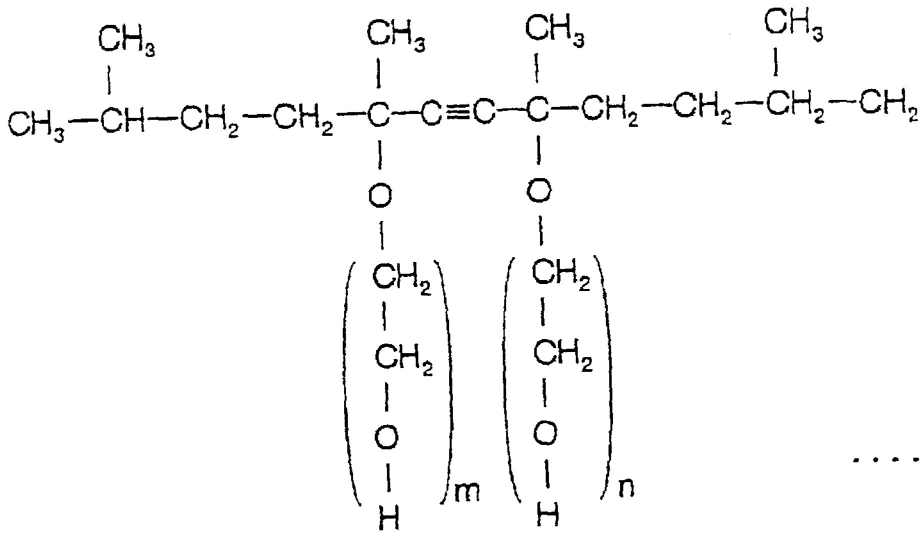

..... (I)

**2.** A water based ink composition as set forth in claim 1, wherein m and n in the general formula (I) are integer and value of m + n is in a range of 1 to 30.

**3.** A water based ink composition as set forth in claim 1 or 2, wherein said compound expressed by the general formula (I) is contained in said water based ink composition within a range of 0.01 to 1.0 Wt%.

**4.** A water based ink composition as set forth in any of claims 1 to 3, wherein said pigment contains in a range of 0.1 to 25 Wt% with respect to said composition.

**5.** A water based ink composition as set forth in any of claims 1 to 4, wherein said organic solvent is a water soluble organic solvent and is contained in said water based ink composition within a range of 5 to 50 Wt%.

**6.** A water based ink composition as set forth in any of claims 1 to 5, wherein said organic solvent contains at least one kind of organic compound selected among diethylene glycol, propylene glycol, polyethylene glycol, glycerin, triethylene glycol monobutyl ether or diethylene glycol monobutyl ether.

**7.** A water based ink composition as set forth in any of claims 1 to 6, wherein static surface tension of said water based ink composition is in a range of 20 to 50 dyne/cm.

**8.** A water based ink composition as set forth in any of claims 1 to 7, wherein pH value is in a range of 6.5 to 10.

**9.** A water based ink composition as set forth in any of claims 1 to 8, wherein a viscosity is in a range of 1 to 10 cps.

**10.** A water based ink composition composed of at least water, pigment, at least one kind of compound expressed by the following general formula (II):

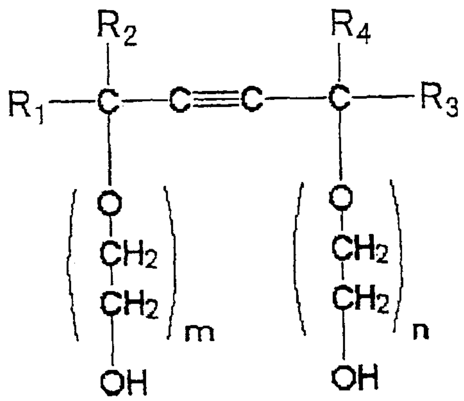

..... (II)

wherein $R_1$ and $R_3$ are alkyl group with branch of carbon number 4 to 17, $R_2$ and $R_4$ are alkyl group of carbon number 1 to 10, m and n are 0 or positive integer,
and at least one kind of alkylene oxide polymer expressed by the following the general formula (III):

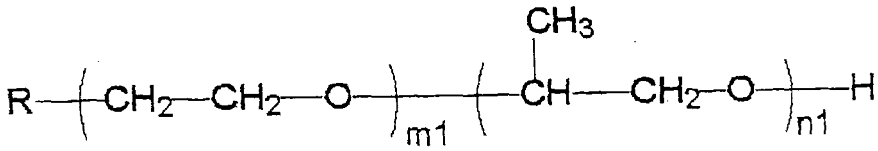

..... (III)

wherein m1 and n1 are 0 or positive integer, R is one selected among H, alkyl group of carbon number 1 to 10 and alkoxyl group of carbon number 1 to 10.

**11.** A water based ink composition as set forth in claim 10, wherein said acetylene glycol type compound expressed by the foregoing general formula (II) is at least one kind of acetylene glycol type composition expressed by the following general formula (IV):

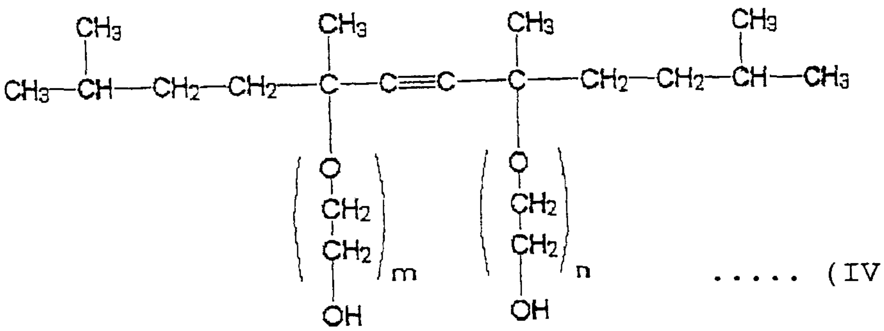

..... (IV)

wherein m and n are 0 or positive integer.

**12.** A water based ink composition as set forth in claim 10 or 11, wherein said acetylene glycol type compound and said alkylene oxide polymer are contained in said water based ink composition in a compound ratio of 0.01 to 10 : 0.01 to 5 by weight.

**13.** A water based ink composition as set forth in any of claims 10 to 12, wherein said acetylene glycol type compound and said pigment are contained in said water based ink composition in a compound ratio of 0.01 to 10 : 0.1 to 25 by weight.

**14.** A water based ink composition as set forth in any of claims 10 to 13, which further contains an organic solvent.

**15.** A water based ink composition as set forth in any of claims 10 to 14, wherein said acetylene glycol type compound and said organic solvent are contained in said water based ink composition in a compound ratio of 0.01 to 10 : 5 to 50 by weight.

**16.** A water based ink composition as set forth in any of claims 10 to 15, wherein m + n in said general formula (II) and (IV) is in a range of 1 to 30, and m1 and n1 in said general formula (III) are positive integer, respectively.

**17.** A water based ink composition as set forth in any of claims 10 to 16, wherein said compound expressed by the general formula (II) is contained in a range of 0.01 to 10.0 Wt% versus total amount of the water based ink composition.

**18.** A water based ink composition as set forth in any of claims 10 to 17, wherein said compound expressed by the general formula (III) is contained in a range of 0.01 to 5.0 Wt% versus total amount of the water based ink composition.

**19.** A water based ink composition as set forth in any of claims 10 to 18, wherein said pigment is contained in a range of 0.1 to 25 Wt% versus total amount of the water based ink composition.

**20.** A water based ink composition as set forth in any of claims 10 to 19, wherein said organic solvent is contained in a range of 5 to 50 Wt% versus total amount of the water based ink composition.

**21.** A water based ink composition as set forth in any of claims 10 to 20, wherein said organic solvent is a water soluble organic solvent.

**22.** A water based ink composition as set forth in claim 21, wherein said organic solvent contains at least one kind of organic compound selected among diethylene glycol, propylene glycol, polyethylene glycol, glycerin, triethylene glycol monobutyl ether or diethylene glycol monobutyl ether.

**23.** A water based ink composition as set forth in any of claims 10 to 22, wherein static surface tension of said water based ink composition is in a range of 20 to 50 dyne/cm at 20 °C.

**24.** A water based ink composition as set forth in any of claims 10 to 23, wherein pH value is in a range of 6.5 to 10.

**25.** A water based ink composition as set forth in any of claims 10 to 24, wherein a viscosity is in a range of 1 to 10 cps at 20 °C.

European Patent Office

# EUROPEAN SEARCH REPORT

Application Number
EP 99 12 5308

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199304<br>Derwent Publications Ltd., London, GB;<br>Class E17, AN 1993-031734<br>XP002133543<br>& JP 04 359071 A (SEIKO EPSON CORP),<br>11 December 1992 (1992-12-11)<br>* abstract * | 1-3,6,7 | C09D11/00 |
| X | PATENT ABSTRACTS OF JAPAN<br>vol. 017, no. 221 (C-1054),<br>7 May 1993 (1993-05-07)<br>& JP 04 359072 A (SEIKO EPSON CORP),<br>11 December 1992 (1992-12-11)<br>* abstract * | 1-3,6,7 | |
| A | EP 0 592 774 A (CANON KK)<br>20 April 1994 (1994-04-20)<br>* page 4, line 1-45 * | 10 | |
| A | EP 0 859 037 A (SEIKO EPSON CORP)<br>19 August 1998 (1998-08-19)<br>* page 3, line 21-23 *<br>* page 3, line 45 - page 4, line 30 *<br>* page 5, line 18-24 * | 1-6,9 | TECHNICAL FIELDS SEARCHED (Int.Cl.7)<br>C09D |
| A | EP 0 842 994 A (CANON KK)<br>20 May 1998 (1998-05-20)<br>* page 5, line 4-8 *<br>* page 5, line 55 *<br>* page 6, line 1-52 * | 1-7,10,<br>19-23 | |

The present search report has been drawn up for all claims

| Place of search | Date of completion of the search | Examiner |
|---|---|---|
| THE HAGUE | 20 March 2000 | Miller, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 12 5308

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2000

| Patent document cited in search report | Publication date | Patent family member(s) | Publication date |
|---|---|---|---|
| JP 4359071 A | 11-12-1992 | NONE | |
| JP 04359072 A | 11-12-1992 | NONE | |
| EP 0592774 A | 20-04-1994 | JP 6271802 A | 27-09-1994 |
| | | JP 6025573 A | 01-02-1994 |
| | | JP 6024123 A | 01-02-1994 |
| | | AU 666951 B | 29-02-1996 |
| | | AU 4186593 A | 13-01-1994 |
| | | AU 682993 B | 23-10-1997 |
| | | AU 5451696 A | 01-08-1996 |
| | | CA 2100201 A | 11-01-1994 |
| | | EP 0974627 A | 26-01-2000 |
| | | KR 138890 B | 28-04-1998 |
| | | US 5395434 A | 07-03-1995 |
| | | KR 138802 B | 28-04-1998 |
| EP 0859037 A | 19-08-1998 | JP 10287837 A | 27-10-1998 |
| EP 0842994 A | 20-05-1998 | JP 10195360 A | 28-07-1998 |
| | | US 5976233 A | 02-11-1999 |

EPO FORM P0459

For more details about this annex : see Official Journal of the European Patent Office, No. 12/82